# EUROPEAN PATENT APPLICATION

(11) **EP 1 415 878 A2**
(43) Date of publication of application: **06.05.2004**
(21) Application number: 03024501.3
(22) Date of filing: 24.10.2003
(51) Int. Cl.: B60T 11/20

(54) **Hydraulic braking system for earth-moving vehicles, particularly agricultural tractors and the like**

(30) Priority: 29.10.2002 IT MO20020312
(71) Applicant: Safim S.p.A., 41100 Modena (IT)
(72) Inventor: Mamei, Eronne, 41100 Modena (IT); Mamei, Omer, 41100 Modena (IT)
(74) Representative: Modiano, Guido, Dr.-Ing.

(57) **Abstract**

A hydraulic braking system for earth-moving vehicles, particularly agricultural tractors and the like, comprising two circuits (2) for actuating respective braking units (5, 6, 7) of an earth-moving vehicle that can be actuated by corresponding actuation elements (4), each one of the circuits being provided with a unit for actuating the respective braking unit which comprises a power-assisted braking device (6) that is associated with the corresponding actuation element, with means (12) for supplying liquid at a supply pressure and with a differential master cylinder (7) that comprises a piston (16) provided with a first working surface (17) and with a second working surface (18), which are respectively accommodated within an approach chamber (19) and a braking chamber (20), and is allowed to move in a reciprocating fashion, and with means for connecting the approach chamber (19) to the discharge (29), which comprise hydraulic driving means (30) that are associated with the supply means (12).

## Description

The present invention relates to a hydraulic braking system for earth-moving vehicles, particularly agricultural tractors and the like.

It is known that earth-moving vehicles are generally provided with hydraulic circuits for actuating the braking units, which are of the shoe type or the like.

In view of the considerable inertia of these vehicles and of the fact that they are intended to be used on rough and uneven terrain, these braking systems must be particularly powerful and efficient.

In agricultural tractors, for example, two separate hydraulic circuits are generally provided, that are substantially identical to each other and provided with respective brake actuation units provided with brake pumps that are adapted to feed pressurized oil to the right or left side of the vehicle.

In larger vehicles, such units can be provided with power-assisted braking devices, which are supplied by means of oil supply circuits and are associated with respective master cylinders of the conventional type, which are adapted to send pressurized oil to the brake shoes.

The actuation units are actuated by means of pedals arranged inside the driver's cab of the tractor.

As it is known, when the engine is on, the power-assisted braking device allows to reduce the force required by the user, since it amplifies the mechanical thrust action applied to the pedals.

To brake when the engine is off or in an emergency, i.e., when the power-assisted braking device is not supplied with pressurized oil, it is possible to provide auxiliary devices such as accumulators or other devices that replace its function.

These known braking systems are not free from drawbacks, including the fact that the vehicle can be awkward to drive, the stroke of the pedals required in order to achieve suitable braking pressure when the brake pumps are discharged is rather long, and auxiliary devices may be required in order to reduce the braking force required when the engine is off.

Moreover, conventional hydraulic braking systems are susceptible of further improvements aimed at optimizing their functionality, reducing the braking force that the user is required to provide, and increasing the feeling of comfort of the user during driving and maneuvering in any operating condition.

The aim of the present invention is to eliminate the above-noted drawbacks of the prior art, by providing a hydraulic braking system for earth-moving vehicles, particularly agricultural tractors and the like, that allows to increase functionality and optimize performance.

Within this aim, an object of the present invention is to provide a hydraulic braking system for earth-moving vehicles that is simple, relatively easy to provide in practice, safe in use, effective in operation, and of a relatively low cost.

This aim and this and other objects that will become better apparent hereinafter are achieved by the present hydraulic braking system for earth-moving vehicles, particularly agricultural tractors and the like, of the type that comprises two circuits for actuating respective braking units of an earth-moving vehicle that can be actuated by corresponding actuation elements, each one of said circuits being provided with a unit for actuating the respective braking unit which comprises a power-assisted braking device that is associated with the corresponding actuation element, with means for supplying liquid at a supply pressure and with a differential master cylinder that comprises a piston provided with a first working surface and with a second working surface, which are respectively accommodated within an approach chamber and a braking chamber, and is allowed to move in a reciprocating fashion, and with means for connecting said approach chamber to the discharge, characterized in that said means for connection to discharge comprise hydraulic driving means that are associated with said supply means.

Further characteristics and advantages of the present invention will become better apparent from the following detailed description of a preferred but not exclusive embodiment of a hydraulic braking system for earth-moving vehicles, particularly agricultural tractors and the like, illustrated by way of non-limiting example in the accompanying drawings, wherein:
Figure 1 is a hydraulic diagram of a hydraulic braking system for earth-moving vehicles, particularly agricultural tractors and the like, according to the invention;
Figure 2 is a partially sectional schematic view of an actuation unit used in the braking system according to the invention;
Figure 3 is a sectional view, taken along the line III-III of Figure 2;
Figure 4 is a schematic sectional view of the means for connection to discharge of the system of Figure 2;
Figure 5 is a schematic sectional view of the means for connection to discharge of Figure 4;
Figure 6 is a schematic sectional view of the means for connection to discharge of Figure 4;
Figure 7 is a schematic sectional view of the means for connection to discharge of Figure 4.

With reference to the figures, the reference numeral 1 generally designates a hydraulic braking system for earth-moving vehicles, particularly agricultural tractors and the like.

The system 1 comprises two circuits 2 for actuating respective braking units of the shoe type or other type, which are not shown because they are of a known type, of a conventional earth-moving vehicle such as an agricultural tractor or the like.

The circuits 2 are substantially identical.

Each circuit 2 can be actuated by a user by means of corresponding actuation elements, which are constituted for example by pedal-type levers 3.

Each circuit 2 is provided with a unit 4 for actuating the corresponding braking unit, which comprises a pump body 5 which accommodates internally a power-assisted braking device 6 associated with a differential master cylinder 7, both of which are of a conventional type.

The power-assisted braking device 6 is constituted by a distribution bar 8, which is associated with the corresponding pedal-type lever 3 by means of a conventional lever system, not shown.

The bar 8 can move with a reciprocating rectilinear motion within the pump body 5, and as a function of the balance of the forces that act on said bar it is adapted to connect the chamber of a power-assisted brake 9, formed inside the pump body 5, and a corresponding working surfaces 9a to an intake port 10 or to a discharge port 11, which are associated with means 12 for supplying a liquid, such as oil or the like.

The oil supply pressure is on the order of 16-18 bars, and the corresponding supply means 12 comprise a conventional pump 13, for example of the gear type, and a discharge tank 14.

The power-assisted braking device 6 is associated with a one-way valve 15 that is interposed between the ports 10 and 11 and allows the chamber of the power-assisted brake 9 to draw oil from the discharge tank 14 in emergency conditions so as to avoid cavitation when the engine is off, i.e., when the supply pump 13 is not operating.

The differential master cylinder 7 comprises a piston 16 that is partially hollow and is provided with a first working surface 17 and a second working surface 18, which are respectively accommodated in an approach chamber 19 and a braking chamber 20, which are formed within the pump body 5; the piston is able to perform a reciprocating rectilinear motion along the chambers.

The first working surface 17 is constituted by an annular element and the second working surface 18 is formed inside the hollow portion of the piston 16.

The first working surface 17 is larger than the second working surface 18.

The first working surface 17 acts in the first step of the braking action in order to perform the step for moving the shoes closer at low pressure; the second working surface 18 allows to perform the actual high-pressure braking step.

In this manner it is possible to contain the force required on the pedal-type levers 3 while working with substantial flow-rates of pressurized oil.

The approach chamber 19 is connected to an oil supply reservoir 21 by means of an intake valve 22 that allows the one-way flow of the oil from said tank toward the approach chamber 19 and allows to fill said chamber during the return stroke of the piston 16.

The approach chamber 19 is connected to the braking chamber 20 by means of a delivery valve 23 of the conventional type.

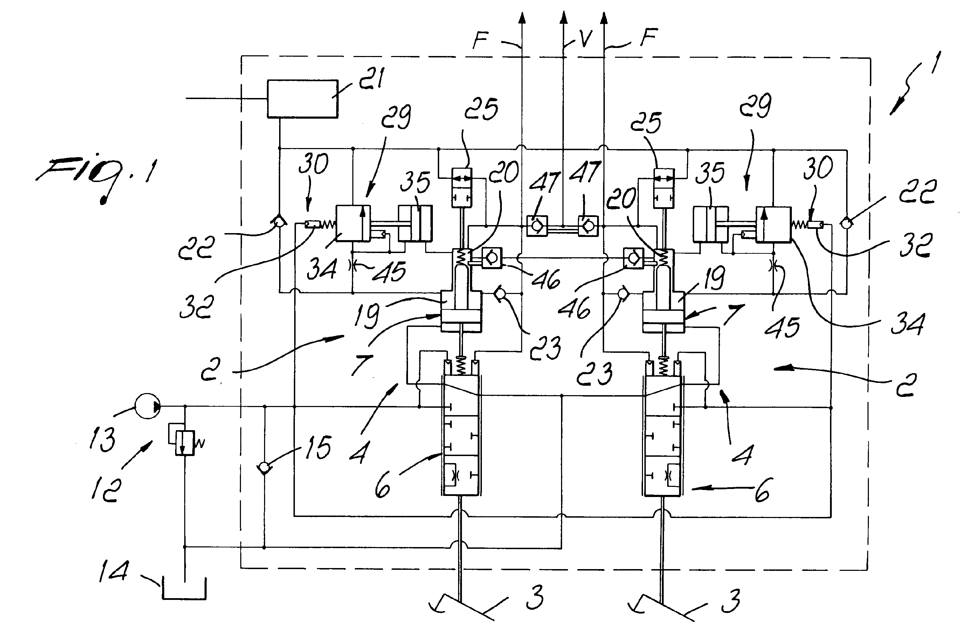

The chambers 19 and 20 are associated with the respective braking unit by means of connecting ducts, generally designated by the reference letter F in the diagram of Figure 1.

Each actuation unit 4 is provided with a first elastic return spring 24 of the helical compression type, with the corresponding piston 16 and with a foot valve, generally designated by the reference numeral 25, that connects the braking chamber 20 to the reservoir 21.

The foot valve 25, in the inactive position, allows two-way flow, and instead interrupts the connection between the braking chamber 20 and the reservoir 21 after the first part of the stroke of the piston 16.

Conveniently, each actuation unit 4 has a secondary reaction piston 26 that is interposed between the distribution bar 8 and the piston 16, which allows to transmit to the corresponding pedal-type lever 3 a reaction that is proportional to the actual braking pressure.

The secondary reaction piston 26 is accommodated in a seat 27 formed in the piston 16 and is associated with a second elastic return spring 28, of the helical compression type, which is interposed between said piston and the secondary reaction piston 26 and is adapted to press it against the distribution bar 8.

Each circuit 2 further comprises means 29 for connecting to the discharge the corresponding approach chamber 19, which are provided with hydraulic driving means 30 that are associated with the supply means 12.

The means for connection to discharge 29 are accommodated in an interspace 31 formed in the pump body 5 and closed by a plug 31a.

Thanks to the driving means 30 it is possible to vary, according to the pressure with which the oil is supplied to the power-assisted braking device 6, the difference in pressure between the braking chamber 20 and the approach chamber 19 for which said approach chamber is discharged.

The driving means 30 comprise a single-acting cylinder 32 that is subjected to the supply pressure and is constituted by a cup-shaped piston 33, which is provided on its inner wall with an annular raised portion 33a and can move alternately in a sleeve constituted by the interspace 31.

The means 29 for connection to discharge further comprise a maximum-pressure valve 34 and a slider 35 for connection to discharge that is adapted to actuate the opening of said valve.

The maximum-pressure valve 34 comprises a chamber 36 that is formed by a portion of the interspace 31 and is provided with an inlet port 37 and with an outlet port 38, and a flow control body 39 that is accommodated within the chamber 36.

The ports 37 and 38 are connected respectively to the approach chamber 19 and to the reservoir 21.

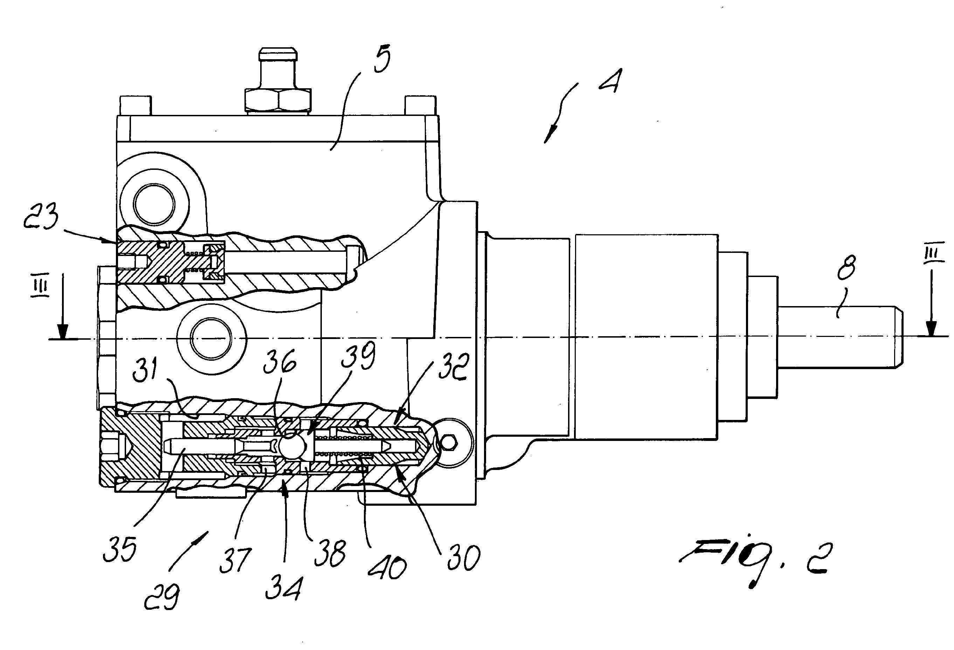

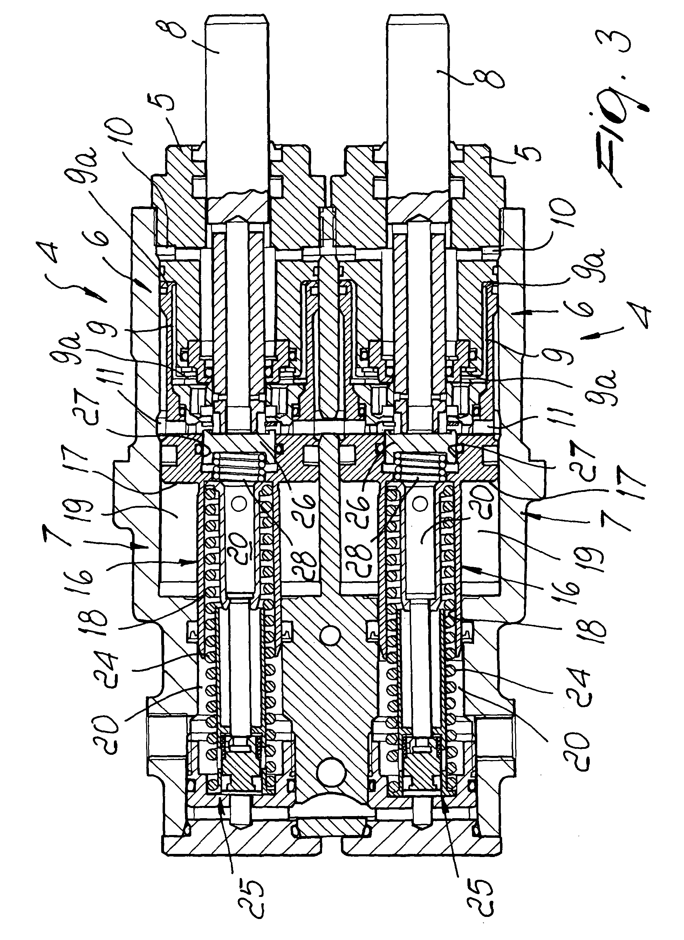

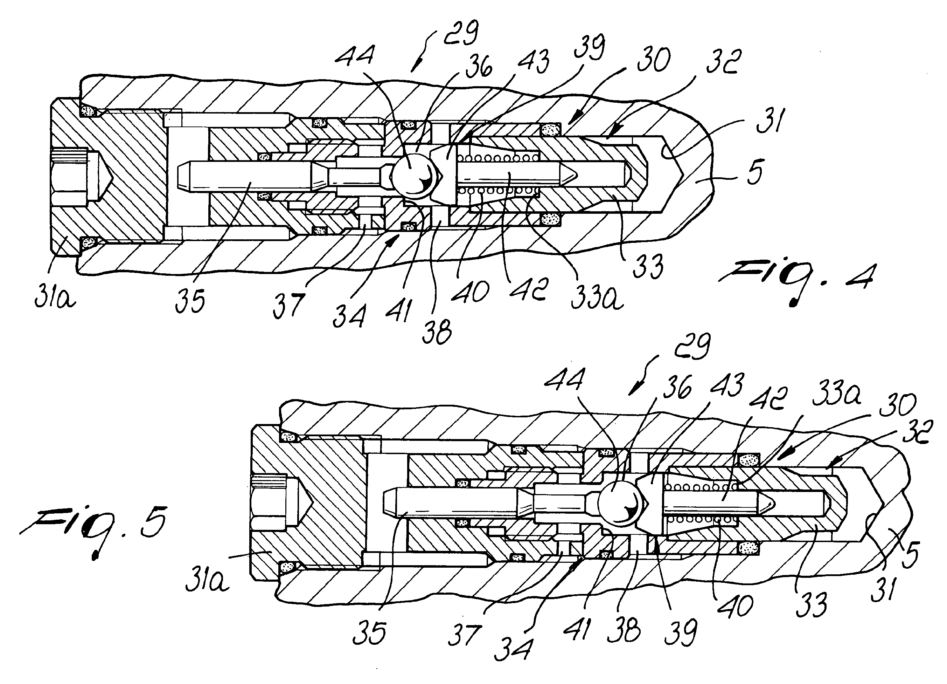

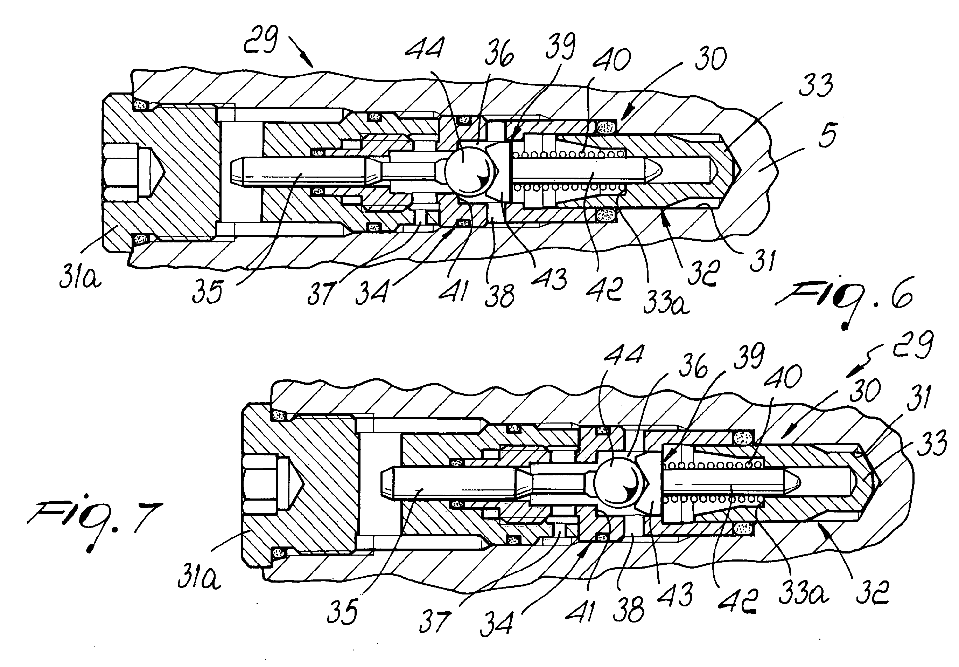

The flow control body 39 is interposed between the ports 37 and 38 and is adapted to assume alternately a configuration for separating said ports (Figures 4 and 6) and a configuration for connecting them (Figures 5 and 7).

The maximum-pressure valve 34 further comprises elastic contrast means that are constituted by a helical compression spring 40 that is adapted to keep the flow control body 39 in the separation configuration.

The cup-shaped piston 33 cooperates with the spring 40 in keeping the flow control body 39 in the separation configuration, while the slider 35 tends to contrast the action of the tubular piston 33 and of the spring 40.

The chamber 36 is provided with a shoulder 41, which is interposed between the ports 37 and 38 and against which the flow control body 39 abuts in the separation configuration.

The flow control body 39 is constituted by a stem 42, on which the spring 40 is wound and which is inserted in the cup-shaped piston 33, a contoured head 43, which is rigidly coupled to said stem and is arranged at the end directed toward the chamber 36, and a ball 44, which is interposed between the contoured head 43 and the shoulder 41 and is adapted to abut thereon.

The spring 40 is interposed between the contoured head 43 and the annular raised portion 33a.

The cup-shaped piston 33, when the supply pump 13 is operating, acts directly on the spring 40, increasing the pressure variation between the braking chamber 20 and the approach chamber 19 that is required in order to allow the opening of the maximum-pressure valve 34 and therefore the discharge of said approach chamber.

Finally, a choke 45 is provided upstream of the inlet port 37, which in rapid braking conditions avoids an excessive flow of oil through the maximum-pressure valve 34 due to high load losses along the connecting ducts F.

The slider 35 acts as a piston and can be accommodated so that it can move inside the interspace 31.

The slider 35 has an end that is directed toward the maximum-pressure valve 34 and is subjected to the pressure of the approach chamber 19 and an opposite end that is subjected to the pressure of the braking chamber 20.

When the pressure of the braking chamber 20 exceeds by a certain amount the pressure of the approach chamber 19, the slider 35 acts on the maximum-pressure valve 34, overcoming the reaction of the spring 40 that is preloaded by the cup-shaped piston 33, and causes the opening of said valve.

Figures 4 and 5 illustrate the means 29 for connection to discharge in the active condition, i.e., with the supply pump 13 in operation and with the flow control body 39 respectively in the separation configuration and in the connection configuration.

Figures 6 and 7 illustrate the means 29 for connection to discharge in emergency conditions, i.e., with the supply pump 13 inactive and with the flow control body 39 respectively in the separation configuration and in the connection configuration.

Finally, the system 1 comprises two balancing valves 46 and a so-called inverse "flip-flop" valve 47, all of which are of a conventional type.

The balancing valves 46 are of the one-way type with mechanical opening and are actuated by the advancement of the corresponding pistons 16; the valves 46 allow to disconnect the circuits 2 if only one of them is operated, or to balance them if they are both operated.

The "flip-flop" valve 47 allows to drive an external device, such as an additional braking device or other device not shown in the figures, with a pressure that is at least equal to the pressure reached in the braking units when both circuits 2 are operated.

In Figure 1, the reference letter V designates the driving connection to said external device.

The operation of the invention is now described in relation to one of the two circuits 2, and is understood to be identical for both circuits.

In emergency conditions, i.e., when the power-assisted braking device 6 is not supplied by the supply pump 13, the distribution bar 8 acts directly on the piston 16.

When braking begins, the distribution bar 8 performs the entire stroke until it rests against the piston 16; after the first portion of the stroke of said piston, the foot valve 25 interrupts the connection to the reservoir 21.

Until the pressure inside the approach chamber 19 reaches the set value of the maximum-pressure valve 34, the first working surface 17 is active and the pressurized oil is sent from the approach chamber 19 to the braking chamber 20 and then to the braking unit by means of the delivery valve 23.

During the approach step, the pressure in the approach chamber 19 and in the braking chamber 20 is substantially identical.

Then the maximum-pressure valve 34 begins to open, and if one continues to press on the pedal-type lever 3, the pressure increases only in the braking chamber 20 while it continues to decrease in the approach chamber 19.

When the value of the pressure in the braking chamber 20 is such that the slider 35 completely opens the maximum-pressure valve 34, the approach chamber 19 is completely discharged and the piston 16 behaves like a direct cylinder, since only the second working surface 18 is active.

At the end of the thrust stroke of the piston 16, when the return stroke of said piston begins, the intake valve 22 allows to fill the approach chamber 19.

When the piston 16 returns to the inactive condition, the foot valve 25 opens and allows the oil pumped into the braking unit to return to the reservoir 21, eliminating the pressure inside the braking chamber 20.

In operating conditions, the action of the power-assisted braking device 6 reduces the force required by the user to operate the piston 16 and the driving means 30 produce an increase in the pressure variation between the braking chamber 20 and the approach chamber 19 that causes the maximum-pressure valve 34 to open, indicating transition from the approach step to the actual braking step.

In practice it has been found that the described invention achieves the intended aim and object.

The invention thus conceived is susceptible of numerous modifications and variations, all of which are within the scope of the appended claims.

All the details may further be replaced with other technically equivalent ones.

In practice, the materials used, as well as the shapes and the dimensions, may be any according to requirements without thereby abandoning the scope of the protection of the appended claims.

The disclosures in Italian Patent Application No. M02002A000312 from which this application claims priority are incorporated herein by reference.

Where technical features mentioned in any claim are followed by reference signs, those reference signs have been included for the sole purpose of increasing the intelligibility of the claims and accordingly, such reference signs do not have any limiting effect on the interpretation of each element identified by way of example by such reference signs.

## Claims

1. A hydraulic braking system for earth-moving vehicles, particularly agricultural tractors and the like, of the type that comprises two circuits for actuating respective braking units of an earth-moving vehicle that can be actuated by corresponding actuation elements, each one of said circuits being provided with a unit for actuating the respective braking unit which comprises a power-assisted braking device that is associated with the corresponding actuation element, with means for supplying liquid at a supply pressure and with a differential master cylinder that comprises a piston provided with a first working surface and with a second working surface, which are respectively accommodated within an approach chamber and a braking chamber, and is allowed to move in a reciprocating fashion, and with means for connecting said approach chamber to the discharge, **characterized in that** said means for connection to discharge comprise hydraulic driving means that are associated with said supply means.

2. The system according to claim 1, **characterized in that** said driving means comprise a single-acting cylinder that is supplied with said supply pressure.

3. The system according to one or more of the preceding claims, **characterized in that** said means for connection to discharge comprise a maximum-pressure valve and a slider for connection to discharge that is adapted to open said valve.

4. The system according to one or more of the preceding claims, **characterized in that** said maximum-pressure valve comprises a chamber that is provided with an inlet port and with an outlet port that are respectively connected to said approach chamber and to said reservoir, a flow control body that is interposed between said ports and is adapted to assume alternately a configuration for separating said ports and a configuration for connecting said ports and elastic contrast means that are adapted to keep said flow control body in the configuration for separating said ports, the driving means cooperating with the elastic means and the delivery slider being adapted to contrast the action of the elastic means and of the driving means.

5. The system according to one or more of the preceding claims, **characterized in that** said chamber is provided with a shoulder that is interposed between said inlet port and said outlet port, against which said flow control body abuts in said separation configuration.

6. The system according to one or more of the preceding claims, **characterized in that** said flow control body is constituted by a stem that is associated with said elastic means, a contoured head that is rigidly coupled to said stem, and a ball that is associated with said head and is adapted to abut against said shoulder.

7. The system according to one or more of the preceding claims, **characterized in that** said single-acting cylinder comprises a cup-shaped piston inside which said stem is accommodated so that it can move and is provided on the inner wall with an annular raised portion for abutment against said elastic means, which are interposed between said head and said raised portion.

8. The system according to one or more of the preceding claims, **characterized in that** said means for connection to discharge comprise a choke that is arranged upstream of said inlet port.

9. The system according to one or more of the preceding claims, **characterized in that** said actuation unit comprises a secondary reaction piston that is interposed between said power-assisted braking device and said differential cylinder.

10. The system according to one or more of the preceding claims, **characterized in that** said actuation unit comprises a foot valve that is adapted to allow the discharge of said braking chamber during the return stroke of said piston.
